# EUROPEAN PATENT APPLICATION

(11) **EP 4 582 793 A1**
(43) Date of publication of application: **09.07.2025**
(21) Application number: 23860877.2
(22) Date of filing: 30.08.2023
(51) Int. Cl.: G01N 21/88, G01N 21/95, G06T 7/00, G06N 20/00, G06N 3/08, G06N 3/0464, H01M 10/42, H01M 50/533

(54) **DEVICE AND METHOD FOR INSPECTING BATTERY ELECTRODE**

(30) Priority: 31.08.2022 KR 20220109765; 09.08.2023 KR 20230103916
(71) Applicant: LG Energy Solution, Ltd., Seoul 07335 (KR)
(72) Inventor: CHA, Yeongeun, Daejeon 34122 (KR); KIM, Shikwon, Daejeon 34122 (KR); KIM, Tae Young, Daejeon 34122 (KR)
(74) Representative: Goddar, Heinz J.
(86) International application number: PCT/KR2023/012884
(87) International publication number: WO 2024/049201

(57) **Abstract**

A device for inspecting a battery electrode, according to an embodiment of the present invention, can: reduce application time accompanying an initial process application and changes in a process environment by extracting an inspection target image containing an area suspected to have defects on the basis of the electrode image acquired from the camera, and setting and applying, depending on the amount of training data, different types of learning models for determining whether an electrode corresponding to the inspection target image is defective; and obtain result data with enhanced precision and high reliability by retraining the learning model on the basis of updated training data.

## Description

This application claims priority to and the benefit of Korean Patent Application No. 10-2022-0109765 filed in the Korean Intellectual Property Office on August 31, 2022 and Korean Patent Application No.10-2023-0103916 filed in the Korean Intellectual Property Office on August 9, 2023, the entire contents of which are incorporated herein by reference.

### [Technical Field]

The present invention relates to an device and method for inspecting electrodes of batteries, and more particularly, to an device and method for inspecting electrodes of batteries, which determines whether the electrode is defective due to surface defects from electrode images using a pre-trained learning model.

### [Background Art]

As the price of energy sources rises due to depletion of fossil fuels and interest in environmental pollution increases, a demand for secondary batteries as an eco-friendly alternative energy source is rapidly increasing.

Lithium secondary batteries among secondary batteries are being applied to various industrial fields such as from mobile application devices to automobiles, robots, and energy storage devices, as a response to today's environmental regulations and high oil price issues.

These lithium batteries are generally classified into cylindrical, prismatic, or pouch types depending on the shape of the exterior material in which the electrode assembly is accommodated.

Among these, cylindrical batteries may be provided in a cell-to-pack (CTP) structure consisting of a plurality of battery cells. In other words, a cylindrical battery is provided in a structure which is assembled by winding electrodes including a separator between an anode and a cathode and inserting it inside a battery can.

In the electrode preparation process of a cylindrical battery, a battery electrode inspection device is be used to detect defects on electrode surfaces caused by foreign substances, scratches, etc.

In general, a battery electrode inspection device analyzes electrode images obtained from cameras installed in a process equipment to determine whether there exists any defect in the electrode surface. Accordingly, in a battery electrode inspection device, result data may be affected by field situation or environment, such as shaking of equipment, changes in process conditions, etc.

Accordingly, a conventional battery electrode inspection device used to apply program logic designed based on defect images obtained from a camera installed in the field during initial application of the process.

Accordingly, the conventional battery electrode inspection device has the disadvantage of requiring a long time for initial application of the process.

In addition, the conventional battery electrode inspection device had the disadvantage that the program logic needs to be continuously redesigned by an engineer when any change occurs in the field situation or environment.

### [Detailed Description of the Invention]

### [Technical Problem]

To obviate one or more problems of the related art, embodiments of the present disclosure provide a system for inspecting electrodes of batteries.

To obviate one or more problems of the related art, embodiments of the present disclosure also provide an device for inspecting electrodes of batteries.

To obviate one or more problems of the related art, embodiments of the present disclosure also provide a method for inspecting electrodes of batteries.

### [Technical Solution]

In order to achieve the objective of the present disclosure, an device for inspecting battery electrodes based on artificial intelligence model may include at least one processor and a memory configured to store at least one instruction executed by the at least one processor, and the at least one instruction may include an instruction to obtain an image of an inspection object in which an area suspected of being defective is extracted from an electrode image in which at least one electrode surface is captured; and an instruction to output result data on whether the battery electrode is defective by inputting the image of the inspection object into a pre-trained learning model.

Here, the instruction to output result data may include an instruction to determine any one learning model among a plurality of learning models according to an amount of training data.

The instruction to determine any one learning model may include an instruction to, upon the amount of training data being less than a predetermined reference value, output the result data using a pre-trained machine learning based first learning model.

The instruction to determine any one learning model may include an instruction to, upon the amount of training data being greater than or equal to the predetermined reference value, output the result data using a pre-trained deep learning based second learning model.

The instruction to output the result data using the first learning model may include an instruction to extract at least one image feature value from the image of the inspection object and an instruction to obtain the result data by inputting the at least one image feature value into the first learning model.

The instruction to extract at least one image feature value from the image of the inspection object may include an instruction to extract the at least one image feature value from the image of the inspection object using a rule-based algorithm.

The at least one image feature value may include data regarding one or more of pixel height, pixel width, pixel maximum value (Peak White), pixel minimum value (Peak Dark), aspect ratio, and roundness which are extracted from the image of the inspection object.

The first learning model may be a random forest-based learning model.

The instruction to output the result data using the pre-trained deep learning based second learning model may include an instruction to obtain the result data by inputting the at least one image of inspection object into the second learning model.

The second learning model may be a convolutional neural network (CNN) based learning model.

The at least one instruction may further include an instruction to re-train the pre-trained learning model by using the result data as learning data.

According to another embodiment of the present disclosure, a method for inspecting battery electrodes, using an device for inspecting battery electrodes based on artificial intelligence model, may include obtaining an image of an inspection object in which an area suspected of being defective is extracted from an electrode image in which at least one electrode surface is captured; and outputing result data on whether the battery electrode is defective by inputting the image of the inspection object into a pre-trained learning model.

Here, the outputing result data on whether the battery electrode is defective includes determining any one learning model among a plurality of learning models according to an amount of at least one training data.

The determining any one learning model among the plurality of learning models may include, upon the amount of training data being less than a predetermined reference value, outputting the result data using a pre-trained machine learning based first learning model.

The determining any one learning model among the plurality of learning models may include, upon the amount of training data being greater than or equal to the predetermined reference value, outputting the result data using a pre-trained deep learning based second learning model.

The outputting the result data using the first learning model may include extracting at least one image feature value from the image of the inspection object; and obtaining the result data by inputting the at least one image feature value into the first learning model.

The extracting at least one image feature value from the image of the inspection object may include extracting the at least one image feature value from the image of the inspection object using a rule-based algorithm.

The at least one image feature value may include data regarding one or more of pixel height, pixel width, pixel maximum value (Peak White), pixel minimum value (Peak Dark), aspect ratio, and roundness which are extracted from the image of the inspection object.

The first learning model may be a random forest-based learning model.

The outputting the result data using the pre-trained deep learning based second learning model may include obtaining the result data by inputting the at least one image of inspection object into the second learning model.

The second learning model may be a convolutional neural network (CNN) based learning model.

The method may further include re-training the pre-trained learning model by using the result data as learning data.

According to another embodiment of the present disclosure, a system for inspecting battery electrodes based on artificial intelligence model may include a camera configured to produce an electrode image by capturing a surface of at least one electrode; and a battery electrode inspecting device configured to obtain an image of an inspection object in which an area suspected of being defective is extracted from the electrode image, input the image of the inspection object into a pre-trained learning model, and output result data on whether the battery electrode is defective.

### [Advantageous Effects]

The battery electrode inspection device and method, and the system including the battery electrode inspection device according to embodiments of the present invention may inspect whether an inspection object image is defective by applying different types of learning models according to amount of learning data and re-train the learning model based on learning data which is updated with result data, thereby obtaining improved reliability of inspection.

### [Brief Description of the Drawings]

FIG. 1 is a conceptual diagram of a process of applicating detection logic in a general battery electrode inspection device.
FIG. 2 is a conceptual diagram of operations of a general battery electrode inspection device when an error occurs.
FIG. 3 is a block diagram of a battery electrode inspection system according to embodiments of the present invention.
FIG. 4 is a block diagram of a battery electrode inspection device according to embodiments of the present invention.
FIG. 5 is an operational flowchart of a battery electrode inspection method using the battery electrode inspection device according to embodiments of the present invention.
FIG. 6 is an image for explaining the step of extracting inspection object images in the battery electrode inspection method according to embodiments of the present invention.
FIG. 7 is an operational flowchart for explaining the step of determining whether an electrode is faulty in the battery electrode inspection method according to embodiments of the present invention.
FIG. 8 is a conceptual diagram for explaining a battery electrode inspection method using a first learning model of the battery electrode inspection method according to an embodiment of the present invention.
FIG. 9 is a conceptual diagram illustrating a battery electrode inspection method using a second learning model of the battery electrode inspection method according to another embodiment of the present invention.
FIG. 10 is a conceptual diagram for explaining the re-learning step in the battery electrode inspection method according to another embodiment of the present invention.

### [Description of reference numbers]

1000: camera 5000: battery electrode inspection device
100: memory 200: processor
300: transceiver device 400: input interface device
500: output interface device600: storage device
700: bus

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

Terms used in the present application are used only to describe specific embodiments, and are not intended to limit the present invention. A singular form includes a plural form if there is no clearly opposite meaning in the context. In the present application, it should be understood that the term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

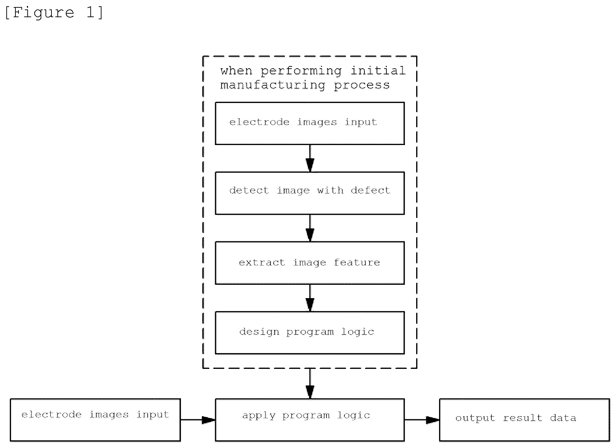

FIG. 1 is a conceptual diagram of a process of applicating detection logic in a general battery electrode inspection device.

Referring to FIG. 1, a battery electrode inspection device can detect defects on the surface of electrodes and determine whether the electrodes are faulty.

A general battery electrode inspection device uses pre-designed detection logic to determine a defect type and fault of at least one electrode image obtained from a camera installed in the field. Here, the detection logic may be logic previously designed by an engineer using image features of at least one electrode image for which a defect type has been confirmed.

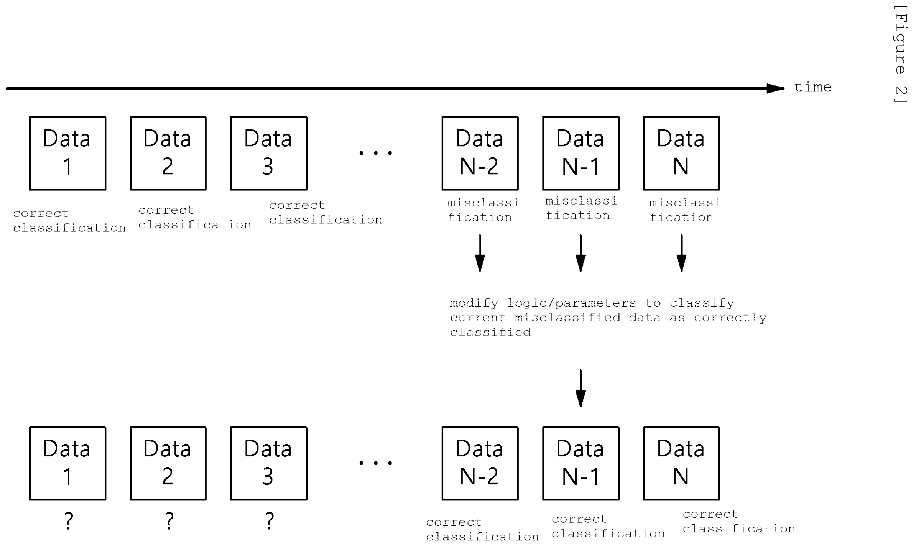

FIG. 2 is a conceptual diagram of operations of a general battery electrode inspection device when an error occurs.

Referring to FIG. 2, the detection logic of a general battery electrode inspection device is designed based on a defect image of the electrode obtained from a camera installed in the field during initial application of the process. Accordingly, the general battery electrode inspection device has the disadvantage that when at least one of field environmental factors or process conditions changes, a detection error can occur due to distortion or deformation of electrode images, and thus, precision of defect detection can decreases. Accordingly, the general electrode detection device has the disadvantage that the detection logic should be continuously modified by an engineer.

In addition, when modifying the detection logic to prevent this problem, the detection logic needs to be modified by acquiring defect images generated from cameras installed in the field to take the process factors described above into account, which has the disadvantage of taking a long time.

In addition, a general battery electrode inspection device has a disadvantage in that when the detection logic is modified, it is difficult to determine classification accuracy of at least one defect image for which inspection has been completed before modification. Here, the defect image may be an image of an electrode that is determined to be faulty due to occurrence of a defect as a result of the inspection of the inspection logic.

Accordingly, the present invention will describe an electrode detection device and method that extracts an image of an inspection object suspected of having a surface defect of an electrode from an electrode image using a pre-trained learning model and determines whether the electrode is faulty based on this.

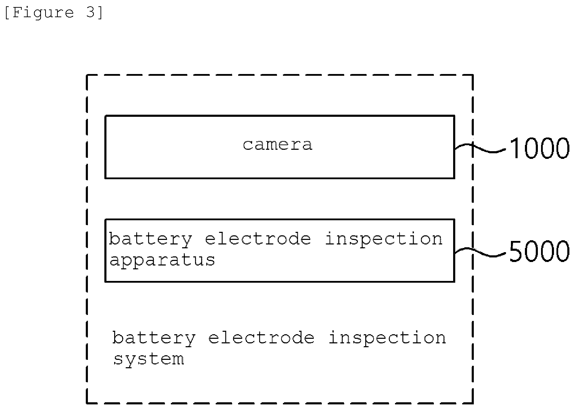

FIG. 3 is a block diagram of a battery electrode inspection system according to embodiments of the present invention.

Referring to FIG. 3, the battery electrode inspection system may detect electrodes with surface defects during an electrode preparation process and determine whether the electrode is faulty.

In more detail, the battery electrode inspection system may include a camera 1000 and a battery electrode inspection device 5000.

The camera 1000 may be installed at a site where an electrode preparation process is performed. For example, the camera 1000 may be fixedly installed in an equipment in which at least one electrode is sequentially moved. Accordingly, the camera 1000 may acquire at least one electrode image by individually photographing the at least one electrode.

The battery electrode inspection device 5000 may be connected with at least one camera 1000 to obtain at least one electrode image from the camera 1000. However, the scope of the present invention is not limited to this, but the battery electrode inspection device 5000 may acquire at least one electrode image through various ways other than a camera.

Thereafter, the battery electrode inspection device 5000 may determine whether the battery electrode is faulty based on at least one electrode image using a pre-trained learning model.

The battery electrode inspection device 5000 will be described in more detail in the follwing.

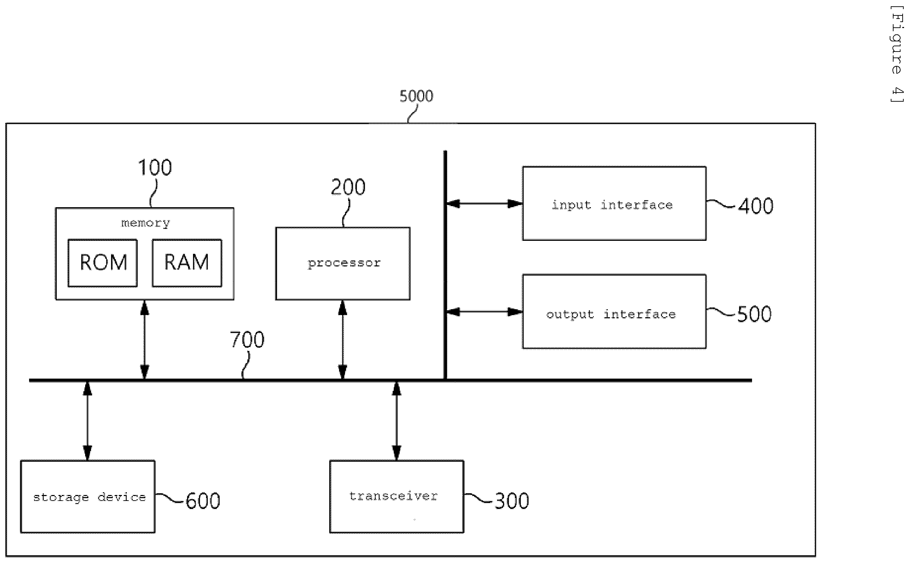

FIG. 4 is a block diagram of a battery electrode inspection device according to embodiments of the present invention.

Referring to FIG. 4, as described above, the battery electrode inspection device 5000 according to embodiments of the present invention may extract at least one image of an inspection object area which is suspected of being defective from at least one electrode image and determine whether the electrode is defective based on the extracted image of inspection using a pre-trained learning model. Here, the defects may include foreign substances, scratches, cracks, etc.

Describing the battery electrode inspection device in detail by configuration, the battery electrode inspection device 5000 may include a memory 100, a processor 200, a transceiver device 300, an input interface device 400, an output interface device 500, and a storage device 600.

According to embodiments, respective components 100, 200, 300, 400, 500, and 600 included in the battery electrode inspection device are connected by a bus 700 and can communicate with each other.

Among the components 100, 200, 300, 400, 500, and 600, the memory 100 and the storage device 600 may include at least one of a volatile storage medium and a non-volatile storage medium. For example, the memory 100 and the storage device 600 may include at least one of read only memory (ROM) and random access memory (RAM).

Among these, the memory 100 may include at least one instruction executed by the processor 200.

According to embodiments, the at least one instruction may include an instruction to obtain an image of an inspection object in which an area suspected of being defective is extracted from an electrode image in which at least one electrode surface is captured; and an instruction to output result data on whether the battery electrode is defective by inputting the image of the inspection object into a pre-trained learning model.

Here, the instruction to output result data may include an instruction to determine any one learning model among a plurality of learning models according to an amount of at least one training data.

The instruction to determine any one learning model may include an instruction to, upon the amount of training data being less than a predetermined reference value, output the result data using a pre-trained machine learning based first learning model.

The instruction to determine any one learning model may include an instruction to, upon the amount of training data being greater than or equal to the predetermined reference value, output the result data using a pre-trained deep learning based second learning model.

The instruction to output the result data using the first learning model may include an instruction to extract at least one image feature value from the image of the inspection object and an instruction to obtain the result data by inputting the at least one image feature value into the first learning model.

The instruction to extract at least one image feature value from the image of the inspection object may include an instruction to extract the at least one image feature value from the image of the inspection object using a rule-based algorithm.

The at least one image feature value may include data regarding one or more of pixel height, pixel width, pixel maximum value (Peak White), pixel minimum value (Peak Dark), aspect ratio, and roundness which are extracted from the image of the inspection object.

The first learning model may be a random forest-based learning model.

The instruction to output the result data using the pre-trained deep learning based second learning model may include an instruction to obtain the result data by inputting the at least one image of inspection object into the second learning model.

The second learning model may be a convolutional neural network (CNN) based learning model
The at least one instruction may further include an instruction to re-train the pre-trained learning model by using the result data as learning data.

Meanwhile, the processor 200 may refer to a central processing unit (CPU), a graphics processing unit (GPU), or a dedicated processor on which methods according to embodiments of the present invention are performed.

As described above, the processor 200 may execute at least one program command stored in the memory 100.

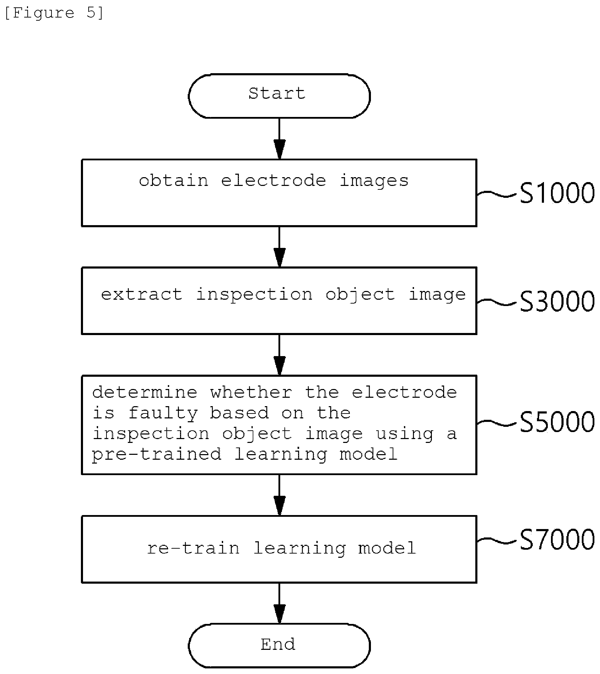

FIG. 5 is an operational flowchart of a battery electrode inspection method using the battery electrode inspection device according to embodiments of the present invention.

Referring to FIG. 5, the battery electrode inspection device 5000 may obtain at least one electrode image (S1000).

Thereafter, the battery electrode inspection device 5000 may extract at least one inspection object image from at least one electrode image (S3000). Here, the electrode image may be an image taken of an electrode surface by at least one camera 1000 mounted on a electrode preparation process equipment.

In addition, the inspection object image may be an image in which at least one area in which a defect occurs in at least one electrode image is individually extracted. Here, the defect may include, for example, scratches, foreign matter, deterioration, etc., but is not limited to these.

Thereafter, the battery electrode inspection device 5000 may determine whether the electrode is faulty based on the inspection object image using a pre-trained learning model (S5000).

Thereafter, the battery electrode inspection device 5000 may re-train the learning model based on at least one updated learning data (S7000).

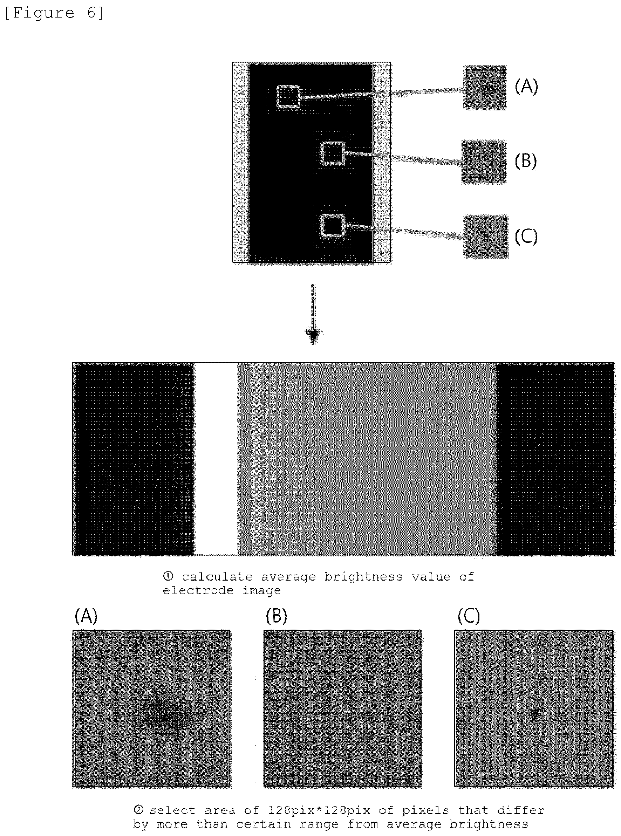

FIG. 6 is an image for explaining the step of extracting inspection object images in the battery electrode inspection method according to embodiments of the present invention.

Referring to FIG. 6, the inspection object image may be obtained using a rule-based algorithm. In other words, the battery electrode inspection device 5000 may output inspection object images by inputting electrode images and a predefined condition command into a rule-based algorithm.

Here, the rule based algorithm may calculate an average brightness value of the electrode image according to a predefined condition command, select at least one pixel that differs by more than a certain range based on the calculated average brightness, and extract a certain area including the corresponding pixels, thereby obtaining and outputting inspection object images. For example, the inspection object image may be a binarized image and may be provided in a size of 128 Pixel x 128 Pixel.

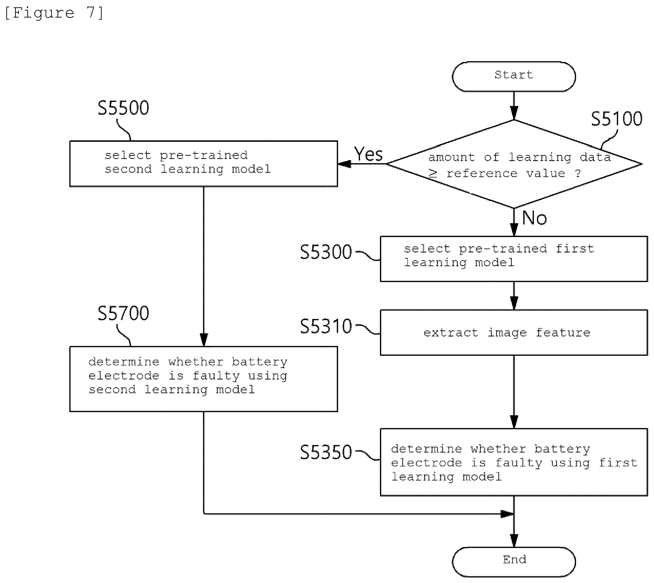

FIG. 7 is an operational flowchart for explaining the step of determining whether an electrode is faulty in the battery electrode inspection method according to embodiments of the present invention.

Referring to FIG. 7, the battery electrode inspection device 5000 according to embodiments of the present invention may check an amount of learning data which is classified by a data set in the memory 100 (S5100). Here, the at least one learning data may include at least one inspection result data pre-inspected by a battery electrode inspection device 5000. In other words, the learning data may include fault data or normal data. For example, fault data may be classified and stored according to type of defects within the data set.

Accordingly, the battery electrode inspection device 5000 may select a type of pre-trained learning model.

According to an embodiment, the battery electrode inspection device 5000 may select a pre-trained first learning model when the amount of learning data is less than a predetermined reference value (S5300).

Afterwards, the battery electrode inspection device 5000 may extract image feature values from the inspection object images (S5310).

Thereafter, the battery electrode inspection device 5000 may determine whether the battery electrode is faulty using the pre-trained first learning model (S5350).

Meanwhile, according to another embodiment, the battery electrode inspection device 5000 may select a pre-trained second learning model when the amount of learning data is greater than or equal to the predetermined reference value (S5500).

Thereafter, the battery electrode inspection device 5000 may determine whether the battery electrode is faulty using the selected second learning model (S5700).

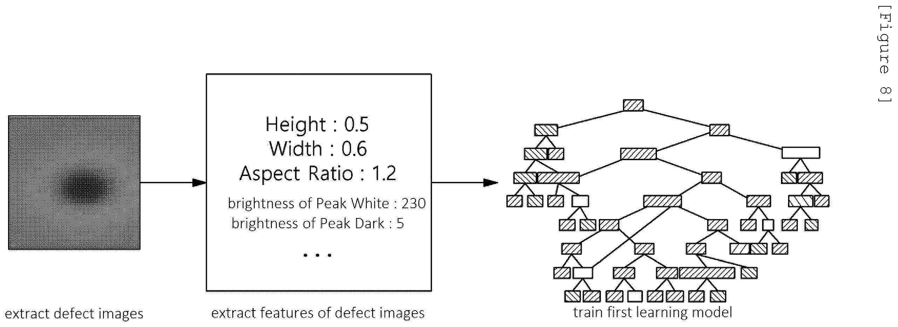

FIG. 8 is a conceptual diagram for explaining a battery electrode inspection method using a first learning model of the battery electrode inspection method according to an embodiment of the present invention.

Referring to FIG. 8, as described above, the battery electrode inspection device 5000 may select the pre-trained first learning model when the amount of learning data is less than the predetermined reference value.

Thereafter, the battery electrode inspection device 5000 may extract image feature values from the inspection object images.

Here, the image feature value may be at least one pixel information extracted from the inspection object images. For example, the image feature value may include one or more of pixel height, pixel width, pixel maximum value (Peak White), pixel minimum value (Peak Dark), aspect ratio, and roundness.

According to an embodiment, the battery electrode inspection device 5000 may obtain image feature values from at least one inspection object image using a rule-based algorithm when the amount of learning data is less than a the predetermined reference value.

Thereafter, the battery electrode inspection device 5000 may determine whether the battery electrode is faulty using the pre-trained first learning model.

To be more specific, the battery electrode inspection device 5000 may receive image feature values extracted from an image to be inspected as input data to a pre-trained first learning model. Thereafter, the battery electrode inspection device 5000 may output result data on whether the battery electrode is faulty based on the inspection object image. Here, the battery electrode may be an electrode corresponding to the inspection object image.

According to an embodiment, the first pre-trained learning model may be a machine learning-based algorithm. For example, the first learning model may be a bagging-type random forest that is pre-trained based on at least one learning data which is pre-classified in the data set of the memory 100.

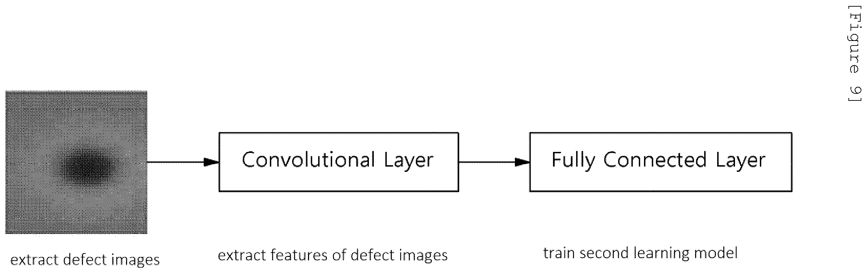

FIG. 9 is a conceptual diagram illustrating a battery electrode inspection method using a second learning model of the battery electrode inspection method according to another embodiment of the present invention.

Referring to FIG. 9, the battery electrode inspection device 5000, as described above, may determine whether the battery electrode is defective using the pre-trained second learning model when the amount of learning data is equal to or more than the predetermined reference value.

In more detail, the battery electrode inspection device 5000 may receive an inspection object image as input data to the pre-trained second learning model. Accordingly, the battery electrode inspection device 5000 may output data as a result of determining whether the battery electrode is faulty based on the inspection object image.

According to an embodiment, the pre-trained second learning model may be a pre-trained learning model based on at least one learning data which is pre-classified in the data set in the memory 100.

To be more specific, the pre-trained second learning model may be an artificial intelligence (AI)-based classification model. In other words, the second learning model may be a deep-learning based classification model which is pre-trained according to pre-stored learning data based on the result data of the battery electrode inspection device 5000.

According to an embodiment, the pre-trained second learning model may be a learning model based on an artificial neural network of convolutional neural network (CNN). For example, the battery electrode inspection device 5000 may pre-train the second learning model so that the second learning model extracts image feature data of the inspection object image using the convolutional layer, reduces the feature data to a lower dimension through the pooling layer, classifies it according to the defect type through the fully connected layer, and determines whether the battery electrode is faulty.

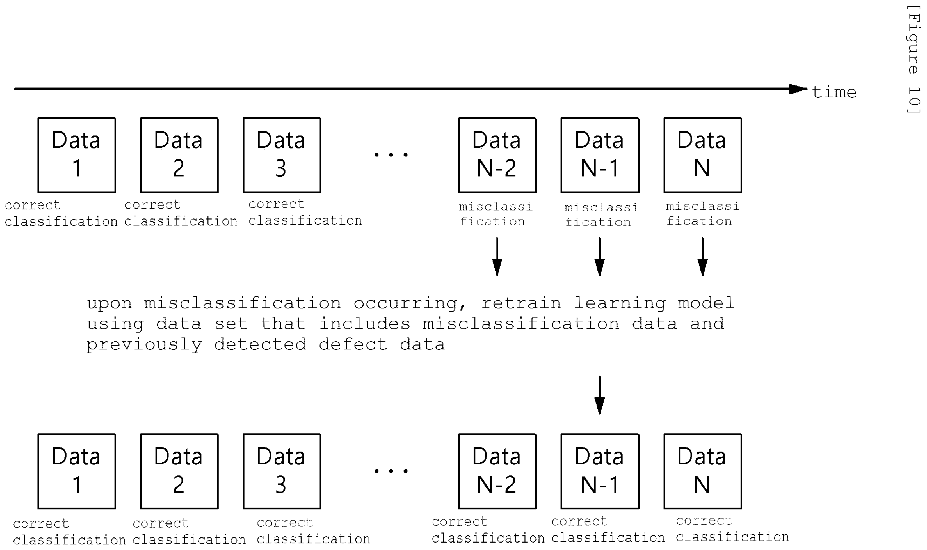

FIG. 10 is a conceptual diagram for explaining the re-learning step in the battery electrode inspection method according to another embodiment of the present invention.

Referring to FIG. 10, the battery electrode inspection device 5000 may store the result data obtained from the embodiments of the present invention, that is, the result data of determining whether the electrode is defective, in the memory 100 and classify it into a data set.

Thereafter, the battery electrode inspection device 5000 may re-train the learning model based on at least one updated learning data. In other words, the battery electrode inspection device 5000 may re-train the learning model by using previously learned result data as learning data. Accordingly, the amount of learning data increases, and thus, the inspection reliability of the battery electrode inspection device 5000 can be improved.

The battery electrode inspection device and method according to embodiments of the present invention have been described above.

The battery electrode inspection device and method according to embodiments of the present invention may extract an inspection object image including an area suspected of being defective based on an electrode image obtained from a camera, determine and apply different types of learning models for determining whether an electrode corresponding to the inspection object image is defective according to the amount of learning data, thereby shortening application time due to initial process application and changes in the process environment.

In addition, the battery electrode inspection device and method can obtain highly reliable result data with improved precision by re-training the learning model based on updated learning data.

The operations of the method according to the embodiments of the present invention may be implemented as a computer-readable program or code on a computer-readable recording medium. The computer-readable recording medium includes all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery electrode inspection device based on artificial intelligence model, the battery electrode inspection device comprising:
at least one processor; and
a memory configured to store at least one instruction executed by the at least one processor,
wherein the at least one instruction includes:
an instruction to obtain an image of an inspection object in which an area suspected of being defective is extracted from an electrode image in which at least one electrode surface is captured; and
an instruction to output result data on whether the battery electrode is defective by inputting the image of the inspection object into a pre-trained learning model.

2. The battery electrode inspection device of claim 1, wherein the instruction to output the result data includes an instruction to determine any one learning model among a plurality of learning models according to an amount of at least one training data.

3. The battery electrode inspection device of claim 2, wherein the instruction to determine any one learning model includes:
an instruction to, upon the amount of training data being less than a predetermined reference value, output the result data using a pre-trained machine learning based first learning model.

4. The battery electrode inspection device of claim 3, wherein the instruction to determine any one learning model includes:
an instruction to, upon the amount of training data being greater than or equal to the predetermined reference value, output the result data using a pre-trained deep learning based second learning model.

5. The battery electrode inspection device of claim 3, wherein the instruction to output the result data using the first learning model includes:
an instruction to extract at least one image feature value from the image of the inspection object; and
an instruction to obtain the result data by inputting the at least one image feature value into the first learning model.

6. The battery electrode inspection device of claim 5, wherein the instruction to extract at least one image feature value from the image of the inspection object includes an instruction to extract the at least one image feature value from the image of the inspection object using a rule-based algorithm.

7. The battery electrode inspection device of claim 5, wherein the at least one image feature value includes data regarding one or more of pixel height, pixel width, pixel maximum value Peak White, pixel minimum value Peak Dark, aspect ratio, and roundness which are extracted from the image of the inspection object.

8. The battery electrode inspection device of claim 3, wherein the first learning model is a random forest-based learning model.

9. The battery electrode inspection device of claim 4, wherein the instruction to output the result data using the pre-trained deep learning based second learning model includes an instruction to obtain the result data by inputting the at least one image of inspection object into the second learning model.

10. The battery electrode inspection device of claim 4, wherein the second learning model is a convolutional neural network CNN based learning model.

11. The battery electrode inspection device of claim 1, wherein the at least one instruction further includes an instruction to re-train the pre-trained learning model by using the result data as learning data.

12. A battery electrode inspection method using a battery electrode inspection device based on artificial intelligence model, the battery electrode inspection method comprising:
obtaining an image of an inspection object in which an area suspected of being defective is extracted from an electrode image in which at least one electrode surface is captured; and
outputing result data on whether the battery electrode is defective by inputting the image of the inspection object into a pre-trained learning model.

13. The battery electrode inspection method of claim 12, wherein the outputing the result data on whether the battery electrode is defective includes determining any one learning model among a plurality of learning models according to an amount of at least one training data.

14. The battery electrode inspection method of claim 13, wherein the determining any one learning model among the plurality of learning models includes:
upon the amount of training data being less than a predetermined reference value, outputting the result data using a pre-trained machine learning based first learning model.

15. The battery electrode inspection method of claim 14, wherein the determining any one learning model among the plurality of learning models includes:
upon the amount of training data being greater than or equal to the predetermined reference value, outputting the result data using a pre-trained deep learning based second learning model.

16. The battery electrode inspection method of claim 14, wherein the outputting the result data using the first learning model includes:
extracting at least one image feature value from the image of the inspection object; and
obtaining the result data by inputting the at least one image feature value into the first learning model.

17. The battery electrode inspection method of claim 16, wherein the extracting at least one image feature value from the image of the inspection object includes extracting the at least one image feature value from the image of the inspection object using a rule-based algorithm.

18. The battery electrode inspection method of claim 16, wherein the at least one image feature value includes data regarding one or more of pixel height, pixel width, pixel maximum value Peak White, pixel minimum value Peak Dark, aspect ratio, and roundness which are extracted from the image of the inspection object.

19. The battery electrode inspection method of claim 14, wherein the first learning model is a random forest-based learning model.

20. The battery electrode inspection method of claim 15, wherein the outputting the result data using the pre-trained deep learning based second learning model includes obtaining the result data by inputting the at least one image of inspection object into the second learning model.

21. The battery electrode inspection method of claim 15, wherein the second learning model is a convolutional neural network CNN based learning model.

22. The battery electrode inspection method of claim 12, further comprising re-training the pre-trained learning model by using the result data as learning data.

23. A battery electrode inspection system based on artificial intelligence model, the battery electrode inspection system comprising:
a camera configured to produce an electrode image by capturing a surface of at least one electrode; and
a battery electrode inspecting device configured to obtain an image of an inspection object in which an area suspected of being defective is extracted from the electrode image, input the image of the inspection object into a pre-trained learning model, and output result data on whether the battery electrode is defective.
